# EUROPÄISCHE PATENTSCHRIFT

(11) **EP 2 470 677 B1**
(45) Veröffentlichungstag und Bekanntmachung des Hinweises auf die Patenterteilung: **29.03.2017**
(21) Anmeldenummer: 10732986.4
(22) Anmeldetag: 16.07.2010
(51) Int. Cl.: C21B 3/08, F27D 17/00, C04B 5/00

(54) **VERFAHREN ZUR HERSTELLUNG VON SCHLACKENGRANULAT UND ZUR WÄRMEREKUPERATION AUS FLÜSSIGEN SCHMELZEN**
METHOD FOR PRODUCING SLAG GRANULATE AND FOR RECUPERATING HEAT FROM LIQUID MELTS
PROCÉDÉ DE PRÉPARATION DE GRANULAT DE LAITIER ET DE RÉCUPÉRATION DE LA CHALEUR DE MATIÈRE EN FUSION LIQUIDE

(30) Priorität: 24.08.2009 DE 102009038695
(43) Veröffentlichungstag der Anmeldung: 04.07.2012
(73) Patentinhaber: ThyssenKrupp Industrial Solutions AG, 45143 Essen (DE)
(72) Erfinder: AUSTENFELD, Sebastian, 59494 Soest (DE); SCHÄFER, Stefanie, 48155 Münster (DE); LAGAR GARCIA, Luis, ES-33001 Oviedo (ES); SCHEFER, Dirk, 59320 Ennigerloh (DE); HOPPE, Andreas, 59555 Lippstadt (DE); SAUER, Markus, 58802 Balve (DE); BRINKSCHULTE, Henning, 48145 Münster (DE)
(74) Vertreter: Tetzner, Michael
(86) Internationale Anmeldenummer: PCT/EP2010/060307
(87) Internationale Veröffentlichungsnummer: WO 2011/023455

(56) Entgegenhaltungen:
- DE-A1- 2 735 390
- JP-A- 11 236 609
- US-A- 1 416 069
- LEYSER P ET AL: "INBA SLAG GRANULATION SYSTEM - ENVIRONMENTAL PROCESS CONTROL" IRON & STEEL TECHNOLOGY, AIST, WARRENDALE, PA, US, Bd. 2, Nr. 4, 1. April 2005 (2005-04-01), Seiten 139-146, XP009051866 ISSN: 1547-0423

## Beschreibung

Die Erfindung betrifft ein Verfahren zur Herstellung von Schlackengranulat und zur Wärmerekuperation aus Schmelzen.

In der Stahlindustrie wird für die Granulation von Schlacke beispielsweise eine Wasserkühlung eingesetzt, wobei mehrere Wasserstrahlen mit einem definierten Druck auf die heiße Schlacke gedüst werden. Ebenso ist es bekannt, die Schlacke auf einen Schleuderteller zu befördern, welcher die Schlacke in Abhängigkeit von der Drehzahl zu unterschiedlich großen Partikeln granuliert. Weiterhin werden Methoden beschrieben, wo die Schlacke zur Granulation in dünnen Platten gewalzt wird. Die Granulation kann dabei ebenso mit einem Trägermaterial, wie Sand, durchgeführt werden.

Bei der Wasserkühlung entsteht Wasserdampf, der als Sattdampf vorliegt. Seine Energie kann daher nicht weiter verwertet werden.

In der DE 31 02 296 A1 wird daher eine Vorrichtung zur Wärmegewinnung aus geschmolzener Schlacke vorgeschlagen, wobei die Schlacke in einen Behälter eingeführt und von diesem zu einer ersten Wärmegewinnungsstation transportiert wird, wo Wasser durch Wärmeabstrahlung von der Schlacke erwärmt wird, während die Schlacke umgerührt und granuliert wird. Nach ihrer Granulierung wird die Schlacke zu einer zweiten Wärmegewinnungsstation befördert, wo ihre Restwärme dazu verwendet wird, Luft durch Wärmeübertragung zu erwärmen. Mit diesem bekannten Verfahren können jedoch keine allzu großen Massenströme verarbeitet werden und auch die Qualität des Schlackengranulats ist für die Verwendung als Bindemittel oder als Zusatz für ein Bindemittel nicht zufriedenstellend.

In der JP 11 236609 A wird Verfahren zur Herstellung von Schlackengranulat und zur Wärmerekuperation aus flüssigen Schmelzen beschrieben, bei dem die flüssige Schlacke zunächst mit einem ersten gasförmigen Kühlmedium abgeschreckt und granuliert wird und anschließend durch ein zweites gasförmiges Kühlmedium weiter abgekühlt wird, wobei die Wärme der gasförmigen Kühlmedien rekuperiert wird.

D3 LEYSER P ET AL: "INBA SLAG GRANULATION SYSTEM - ENVIRONMENTAL PROCESS CONTROL" IRON & STEEL TECHNOLOGY, AIST, WARRENDALE, PA, US, Bd. 2, Nr. 4, 1. April 2005, Seiten 139-146, XP009051866 ISSN: 1547-0423, offenbart neue Anlagen zur Schlackegranulation mit heißem oder kaltem Wasser.

Die DE 27 35 390 A1 beschreibt ein Verfahren zur Wärmerückgewinnung bei geschmolzener Schlacke aus metallurgischen Öfen, wobei die geschmolzene Schlacke zunächst mittels eines Luftstrahls in einen ersten Wärmetauscher hinein zersträubt wird, wo das zersträubte Schlackengranulat im Gleichstrom mit Luft geführt wird, sodass ein erster heißer Luftstrom entsteht. Anschließend werden die heißen Schlackengranulatteilchen in einen zweiten Wärmetauscher eingeführt, wo diese im Gegenstrom zu zugeführter Kalkluft transportiert werden und dadurch einen zweiten Heißluftstrom erzeugen.

Der Erfindung liegt daher die Aufgabe zugrunde ein Verfahren anzugeben, bei dem einerseits eine hohe Produktqualität und andererseits eine möglichst große Wärmerekuperation ermöglicht werden.

Erfindungsgemäß wird diese Aufgabe durch die Merkmale des Anspruches 1 gelöst.

Beim erfindungsgemäßen Verfahren zur Herstellung von Schlackengranulat und zur Wärmerekuperation aus flüssigen Schmelzen wird die flüssige Schmelze zunächst mit einem flüssigen Kühlmedium abgeschreckt und granuliert und anschließend durch ein gasförmiges Kühlmedium weiter abgekühlt, wobei zumindest die Wärme des erwärmten gasförmigen Kühlmediums rekuperiert wird. Die Abschreckung und Granulation der Schmelze wird dabei durch den Impuls des flüssigen Kühlmediums beim direkten Kontakt mit der Schmelze erreicht. Des Weiteren wird nur soviel flüssiges Kühlmedium zur Abschreckung der Schmelze verwendet, dass sich eine glasige Erstarrung der Schmelze im Granulat gerade noch einstellt, wobei die glasige Erstarrung der Schmelze durch mindestens eine Temperaturmessung der granulierten Schmelze zu Beginn der gasförmigen Kühlphase kontrolliert wird.

Das Erreichen der glasigen Erstarrung ist für die Produktqualität des Schlackengranulats, insbesondere bei Verwendung als Bindemittel oder als Zusatz für ein Bindemittel, besonders wichtig. Andererseits hat es sich bei den der Erfindung zugrundeliegenden Versuchen herausgestellt, dass eine effektive Wärmerekuperation nicht mit dem verdampften flüssigen Kühlmedium, sondern im Wesentlichen nur mit dem erwärmten gasförmigen Kühlmedium möglich ist. Es wird daher nur soviel flüssiges Kühlmedium zur Abschreckung der Schmelze verwendet, dass sich die gewünschte glasige Erstarrung gerade noch einstellt und somit möglichst viel Wärme in der abgeschreckten und granulierten Schmelze verbleibt, die dann nachfolgend aus dem erwärmten gasförmigen Kühlmedium rekuperiert werden kann.

Weitere Ausgestaltungen der Erfindung sind Gegenstand der Unteransprüche.

Das Verhältnis von flüssigem Kühlmedium zur Schmelze kann insbesondere durch Temperaturmessung des erwärmten gasförmigen Kühlmediums eingestellt bzw. reguliert werden. Je nach gewünschten Eigenschaften des Endproduktes und der zur rekuperierenden Wärmemenge wird die Menge des flüssigen Kühlmediums so eingestellt, dass wenigstens 70%, vorzugsweise wenigstens 80% der Schmelze glasig erstarrt ist. Gewünschtenfalls kann der Wert aber auch auf wenigstens 90% oder 100% erhöht werden.

Gemäß einer bevorzugten Verfahrensweise werden wenigstens 20% der Wärme der flüssigen Schmelze aus dem gasförmigen Kühlmedium rekuperiert. Die Rekuperation der Wärme erfolgt vorzugsweise durch die Erzeugung elektrischer Energie oder durch die Nutzung der thermischen Energie in verbundenen Anlagenteilen. Als Kühlmedien kommen insbesondere Wasser und Luft zur Anwendung.

Die Zugabe des flüssigen Kühlmediums erfolgt über wenigstens eine Lanze, vorzugsweise über ein Lanzensystem. Auch kann vorgesehen werden, dass der verdampfte Anteil des flüssigen Kühlmediums in wenigstens einer Wärmetauschereinheit abgekühlt und zumindest teilweise erneut als flüssiges Kühlmedium zum Abkühlen der flüssigen Schlacke verwendet wird. Zur Kontrolle der glasigen Erstarrung und/oder der Optimierung der Wärmerekuperation kann es zweckmäßig sein, die Temperatur der granulierten Schmelze nach der Kühlung mit dem gasförmigen Kühlmedium zu messen. Dabei sollte das gasförmige Kühlmedium das glasig erstarrte Material zweckmäßigerweise auf eine Temperatur von unter 300°C abgekühlt haben. Das erhitzte gasförmige Kühlmedium wird vorzugsweise einem Wärmetauscher zugeführt.

Das gemäß dem obigen Verfahren hergestellte Schlackengranulat wird anschließend feinstzerkleinert, insbesondere auf Feinheiten > 4000 cm²/g. Das feinstzerkleinerte Schlackenmaterial kann dann insbesondere als Bindemittel und/oder als Zusatz für ein Bindemittel verwendet werden.

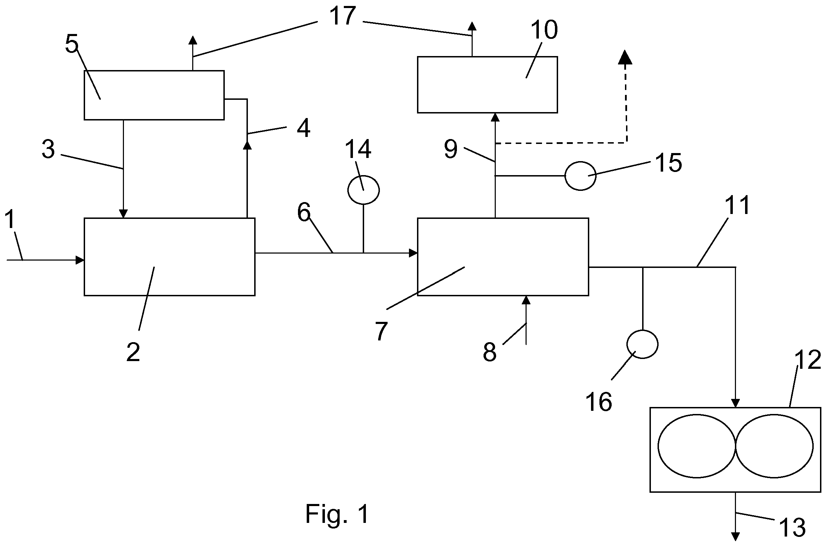

Weitere Ausgestaltungen und Vorteile der Erfindung werden im Folgenden anhand der Beschreibung und der Zeichnung näher erläutert.

Die Zeichnung zeigt ein Blockschaltbild zur Veranschaulichung des Verfahrens zur Herstellung von Schlackengranulat und zur Wärmerekuperation aus flüssigen Schmelzen.

Beim Verfahren zur Herstellung von Schlackengranulat 11 wird eine flüssige Schmelze 1 zunächst in einer ersten Kühlzone 2 mit einem flüssigen Kühlmedium 3 abgeschreckt und granuliert, wobei das flüssige Kühlmedium in direkten Kontakt mit der flüssigen Schmelze 1 kommt. Das flüssige Kühlmedium, bei dem es sich vorzugsweise um Wasser handelt, wird beispielsweise über eine Lanze oder ein Lanzensystem zugegeben. Die Menge des flüssigen Kühlmediums wird dabei so abgestimmt, dass es bei der Abschreckung der flüssigen Schmelze 1 zu einer glasigen Erstarrung derselben kommt. Der bei der Kühlung entstehende verdampfte Anteil 4 des flüssigen Kühlmediums wird in einer Wärmetauschereinheit 5 abgekühlt und kann zumindest teilweise erneut als flüssiges Kühlmedium 3 zum Abkühlen der flüssigen Schlacke 1 verwendet werden. Die in der Wärmetauschereinheit 5 rekuperierte Energie bzw. Wärme 17 wird zur weiteren Verwendung an verbundene Anlagenteile weitergeleitet. In der ersten Kühlzone 2 ist der Impuls und die Menge des flüssigen Kühlmediums 3 so einzustellen, dass die flüssige Schmelze 1 rapide bis unter den Erstarrungspunkt abgekühlt wird, sodass es zumindest zu einer weitgehenden glasigen Erstarrung kommt.

Das in der ersten Kühlzone 2 abgeschreckte und granulierte Material 6 wird einer zweiten Kühlzone 7 zugeführt, wo eine weitere Abkühlung mit einem gasförmigen Kühlmedium 8 stattfindet, wobei das erhitzte gasförmige Kühlmedium 9 in einen Wärmetauscher 10 zur Wärmerekuperation geleitet wird. Auch hier wird die in der Wärmetauschereinheit 10 rekuperierte Energie 17 zur weiteren Verwendung an verbundene Anlagenteile weitergeleitet. Es ist aber auch möglich, dass die im erhitzten gasförmigen Kühlmedium 9 enthaltene Wärme anderweitig genutzt wird, beispielsweise als Vorwärmergas in einem Vorwärmer vor einer Vorrichtung zur Erzeugung der Schmelze oder als vorgewärmte Verbrennungsluft für einen Vorwärmer oder eine Schmelzvorrichtung.

Das in der zweiten Kühlzone 7 bis auf Temperaturen unter 300°C abgekühlte Material wird als Schlackengranulat 11 abgeführt und in einer Mühle 12 feinstzerkleinert. Das entstehende feinstzerkleinerte Schlackengranulat 13 kann als Bindemittel und/oder als Zusatz für ein Bindemittel verwendet werden, wobei es sich durch hohe Festigkeiten, insbesondere hohe Frühfestigkeiten auszeichnet.

Für das flüssige Kühlmedium 3 kommt insbesondere Wasser und für das gasförmige Kühlmedium 8 Luft zur Anwendung. Um einerseits die gewünschte glasige Erstarrung der flüssigen Schmelze sicherzustellen und andererseits eine möglichst große Wärmemenge im abgeschreckten und granulierten Material 6 zurückzuhalten, sind geeignete Mess-, Steuer- und Regelalgorithmen vorzusehen. So kann insbesondere über eine Temperaturmesseinrichtung 14 die Temperatur des abgeschreckten und granulierten Materials 6 zu Beginn der gasförmigen Kühlphase gemessen und zur Kontrolle der glasigen Erstarrung der Schmelze verwendet werden. Weiterhin kann eine zweite Temperaturmesseinrichtung 15 zur Ermittlung der Temperatur des erwärmten gasförmigen Kühlmediums 9 und eine dritte Temperaturmesseinrichtung 16 zur Bestimmung der Temperatur des Schlackengranulats 11 vorgesehen werden.

Im Folgenden werden anhand eines Beispiels der Energiebedarf und die rekuperierte Wärmemenge bei der Herstellung des Schlackengranulats dargestellt:

| | | |
|---|---|---|
| Masse der flüssigen Schmelze: | 1000 | Tagestonnen |
| Massenstrom der Luftkühlung: | 10 | kg/s |
| Temperatur des erwärmten gasförmigen Kühlmediums: | 444 | °C |

| | Energiebedarf | |
|---|---|---|
| 1. Abkühlung, Wasserabkühlung von 1500°C auf 800°C | 2007 | kcal/s |
| 2. Abkühlung, Luftkühlung von 800°C auf 200°C | 1573 | kcal/s |
| Anteil an Energie, der durch die Erwärmung der Luft rekuperiert wird | 519 | kcal/s |
| Gesamtenergiebedarf | 3061 | kcal/s |

Damit ergibt sich mit dem obigen Verfahren gegenüber einer reinen Wassergranulation eine Wirkungsgraderhöhung von wenigstens 15%.

## Patentansprüche

1. Verfahren zur Herstellung von Schlackengranulat (11) und zur Wärmerekuperation aus flüssigen Schmelzen (1), wobei die flüssige Schmelze (1) zunächst mit einem flüssigen Kühlmedium (3) abgeschreckt und granuliert wird und anschließend durch ein gasförmiges Kühlmedium (8) weiter abgekühlt wird, wobei zumindest die Wärme des erwärmten gasförmigen Kühlmediums (9) rekuperiert wird, wobei
• die Abschreckung und Granulation der Schmelze (1) durch den Impuls des flüssigen Kühlmediums (3) beim direkten Kontakt mit der Schmelze (1) erreicht wird und
• nur so viel flüssiges Kühlmedium (3) zur Abschreckung der Schmelze verwendet wird, dass sich eine glasige Erstarrung der Schmelze im Granulat gerade noch einstellt und
• die glasige Erstarrung der Schmelze durch mindestens eine Temperaturmessung der granulierten Schmelze (6) zu Beginn der gasförmigen Kühlphase kontrolliert wird.

2. Verfahren nach Anspruch 1, **dadurch gekennzeichnet, dass** das Verhältnis von flüssigem Kühlmedium (3) zur Schmelze (1) wenigstens durch Temperaturmessung des erwärmten gasförmigen Kühlmediums (9) eingestellt wird.

3. Verfahren nach Anspruch 1, **dadurch gekennzeichnet, dass** wenigstens 20% der Wärme der flüssigen Schmelze (1) aus dem gasförmigen Kühlmedium (9) rekuperiert wird.

4. Verfahren nach Anspruch 1, **dadurch gekennzeichnet, dass** die rekuperierte Wärme (17) gespeichert und/oder zur Stromerzeugung genutzt und/oder einem weiteren Anlagenteil zugeführt wird

5. Verfahren nach Anspruch 1, **dadurch gekennzeichnet, dass** als Kühlmedien (3, 9) Wasser und Luft verwendet werden.

6. Verfahren nach wenigstens einem der vorherigen Ansprüche, **dadurch gekennzeichnet, dass** das flüssige Kühlmedium (3) über wenigstens eine Lanze zugegeben wird.

7. Verfahren nach wenigstens einem der vorherigen Ansprüche, **dadurch gekennzeichnet, dass** der verdampfte Anteil (4) des flüssigen Kühlmediums in wenigstens einer Wärmetauschereinheit (5) abgekühlt und zumindest teilweise erneut als flüssiges Kühlmedium (3) zum Abkühlen der flüssigen Schlacke (1) verwendet wird.

8. Verfahren nach wenigstens einem der vorherigen Ansprüche, **dadurch gekennzeichnet, dass** die Temperatur des Schlackengranulats (11) nach der Kühlung mit dem gasförmigen Kühlmedium (8) gemessen wird.

9. Verfahren nach wenigstens einem der vorherigen Ansprüche, **dadurch gekennzeichnet, dass** das gasförmige Kühlmedium (8) das glasig erstarrte Material (6) auf eine Temperatur von unter 300°C abkühlt.

10. Verfahren nach wenigstens einem der vorherigen Ansprüche, **dadurch gekennzeichnet, dass** das erhitzte gasförmige Kühlmedium (9) wenigstens einem Wärmetauscher (10) zugeführt wird.

## Claims

1. Method for producing slag granulate (11) and for recovering heat from liquid melts (1), wherein the liquid melt (1) is first quenched and granulated with a liquid cooling medium (3) and subsequently further cooled by means of a gaseous cooling medium (8), wherein at least the heat of the heated gaseous cooling medium (9) is recovered, wherein
• the quenching and granulation of the melt (1) is achieved by means of the momentum of the liquid cooling medium (3) during direct contact with the melt (1) and
• only so much liquid cooling medium (3) is used to quench the melt that a glassy solidification of the melt in the granulate is achieved, and
• the glassy solidification of the melt is controlled by means of at least one temperature measurement of the granulated melt (6) at the beginning of the gaseous cooling phase.

2. Method according to claim 1, **characterised in that** the ratio of liquid cooling medium (3) to melt (1) is adjusted at least by means of temperature measurement of the heated gaseous cooling medium (9).

3. Method according to claim 1, **characterised in that** at least 20% of the heat of the liquid melt (1) is recovered from the gaseous cooling medium (9).

4. Method according to claim 1, **characterised in that** the recovered heat (17) is stored and/or used to produce power and/or is supplied to another installation component.

5. Method according to claim 1, **characterised in that** water and air are used as cooling media (3, 9).

6. Method according to at least one of the preceding claims, **characterised in that** the liquid cooling medium (3) is supplied via at least one lance.

7. Method according to at least one of the preceding claims, **characterised in that** the evaporated portion (4) of the liquid cooling medium is cooled in at least one heat exchanger unit (5) and is at least partially used again as a liquid cooling medium (3) for cooling the liquid slag (1).

8. Method according to at least one of the preceding claims, **characterised in that** the temperature of the slag granulate (11) is measured after cooling with the gaseous cooling medium (8).

9. Method according to at least one of the preceding claims, **characterised in that** the gaseous cooling medium (8) cools the vitreously solidified material (6) to a temperature of less than 300°C.

10. Method according to at least one of the preceding claims, **characterised in that** the heated gaseous cooling medium (9) is supplied to at least one heat exchanger (10).

## Revendications

1. Procédé de préparation de granulat de laitier (11) et de récupération de chaleur à partir des matières en fusion liquides (1), sachant que la matière en fusion liquide (1) est d'abord refroidie brutalement par un fluide de refroidissement liquide (3), est granulée et est ensuite encore plus refroidie par un fluide de refroidissement gazeux (8), sachant qu'au moins la chaleur du fluide de refroidissement gazeux, échauffé (9) est récupérée, sachant
- que le refroidissement brutal et la granulation de la matière en fusion liquide (1) sous l'impulsion du fluide de refroidissement liquide (3) sont obtenues par son entrée en contact direct avec la matière en fusion liquide (1), et
- que, pour le refroidissement brutal de la matière en fusion liquide, on n'utilise qu'autant de fluide de refroidissement liquide (3) qu'il n'en faut pour qu'apparaisse la solidification vitreuse de la matière en fusion liquide (1) en granulat,
- que la solidification vitreuse de la matière en fusion liquide est contrôlée par au moins une mesure de la température de la matière en fusion granulée (6) au début de la phase de refroidissement gazeuse.

2. Procédé selon la revendication 1,
**caractérisé en ce que** le rapport entre fluide de refroidissement liquide (3) et masse en fusion (1) est réglé au moins par la mesure de la température du fluide de refroidissement gazeux échauffé (9).

3. Procédé selon la revendication 1,
**caractérisé en ce que** 20 % de la chaleur de la matière en fusion liquide (1), au moins, est récupérée à partir du fluide de refroidissement gazeux (9).

4. Procédé selon la revendication 1,
**caractérisé en ce que** la chaleur récupérée (17) est stockée et / ou utilisée pour la génération de courant et / ou conduite à une autre partie de l'installation.

5. Procédé selon la revendication 1,
**caractérisé en ce que** de l'eau et de l'air sont utilisés comme fluide de refroidissement liquide (3, 9).

6. Procédé selon au moins l'une des revendications précédentes,
**caractérisé en ce que** le fluide de refroidissement liquide (3) est ajouté par l'intermédiaire d'au moins une lance.

7. Procédé selon au moins l'une des revendications précédentes,
**caractérisé en ce que** la part évaporée (4) de fluide de refroidissement liquide est refroidie dans au moins une unité d'échangeurs thermiques (5) et est utilisée de nouveau, au moins partiellement, en tant que fluide de refroidissement liquide (3) du laitier liquide (1).

8. Procédé selon au moins l'une des revendications précédentes,
**caractérisé en ce que** la température du granulat de laitier (11) est mesurée après le refroidissement par le fluide de refroidissement gazeux (8).

9. Procédé selon au moins l'une des revendications précédentes,
**caractérisé en ce que** le fluide de refroidissement gazeux (8) refroidit à une température inférieure à 300°C la matière (6) figée à l'état vitreux.

10. Procédé selon au moins l'une des revendications précédentes,
**caractérisé en ce que** le fluide de refroidissement gazeux échauffé (9) est conduit à au moins un échangeur thermique (10).
